(19) Europäisches Patentamt

European Patent Office

Office européen des brevets

(11) **EP 2 148 462 A1**

(12) **EUROPEAN PATENT APPLICATION**

(43) Date of publication:
**27.01.2010 Bulletin 2010/04**

(51) Int Cl.:
***H04L 9/06*** *(2006.01)*

(21) Application number: **08160920.8**

(22) Date of filing: **22.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **UNIVERSITY COLLEGE CORK**
**Cork,**
**County Cork (IE)**

(72) Inventors:
• **McEvoy, Robert**
  **Cork (IE)**

• **Tunstall, Michael**
  **Cork (IE)**
• **Whelan, Claire Dr.**
  **24 Dublin (IE)**
• **Murphy, Colin Dr.**
  **Cork (IE)**
• **Marnane, Liam Dr.**
  **Cork (IE)**

(74) Representative: **Catesby, Olivia Joanne et al**
  **Tomkins & Co**
  **5 Dartmouth Road**
  **Dublin 6 (IE)**

(54) **A differential side-channel analysis countermeasure**

(57) A method and system for inhibiting Differential Side-Channel Analysis attacks on hardware and embedded software implementations of cryptographic algorithms, the method comprising the steps of applying an AONT to plaintext to be encoded to form a pseudo message, and encrypting the pseudo message using an encryption function and key to create ciphertext.

Fig. 5

## Description

### Field of the Invention

The present invention relates to cryptography. In particular the invention relates to the prevention of successful attacks on hardware implementations of cryptographic algorithms and implementations of same in embedded software.

### Background to the Invention

Electronic devices naturally leak information about the data they are processing. For example, such leakage can manifest itself in the execution time of a cryptographic algorithm on the device, via its power consumption, or through electromagnetic emanations from the device. Side-Channel Attacks (SCA) encompass the class of implementation attacks which passively monitor these unavoidable physical manifestations, then manipulate them to compromise the system's integrity. This field has been a popular research topic since its breakthrough into the cryptographic community in 1996. Inevitably, along with the development of an array of powerful attacks, there has also been active research to find appropriate, effective and efficient countermeasures.

Differential Power Analysis is a popular type of side-channel attack. In general, Differential Power Analysis (DPA) can be described as a sequence of five steps. It is assumed that an attacker is in possession of a device, termed the 'target' device, that is configured with an implementation of a cryptographic algorithm and a secret key. The target device could be a smart card, microprocessor, ASIC, or reconfigurable device such as an FPGA. The aim of the attack is to recover the secret key, or some portion of the secret key. It is common in DPA attacks to assume that an attacker also has access to the following information:

- All messages sent and to and from the target device. Furthermore, an attacker can choose which messages to send to the device.
- Knowledge of the cryptographic algorithm implemented on the device, possibly including information about the circuit design.
- Recordings of the power consumption measurements of the device as various messages are processed.

Equipped with this knowledge, the DPA attack on the implementation proceeds as follows:

### Select an intermediate variable to attack

The DPA attacker begins by examining the details of a cryptographic algorithm being executed on the device. It is assumed that the details of the algorithm are public, such that the security of the algorithm relies solely on the secrecy of the key, as per Kerckhoff's Principle. Therefore, an attacker can select an intermediate variable in the algorithm upon which to focus the DPA attack. For the attack to be successful, the chosen intermediate variable must obey a 'fundamental hypothesis', which states that knowledge of a few key bits (e.g. eight) allows an attacker to determine whether two inputs to the algorithm (or two outputs) give the same value for the intermediate variable or not. In other words, the selected intermediate variable $f(m, k)$ should be at a location in the algorithm where fixed unknown data $k$ (i.e. a portion of the key) is combined with variable known data $m$ (i.e. the inputs or outputs of the algorithm).

### Calculate hypotheses for the chosen intermediate variable

An attacker then typically chooses a set of messages which will be sent to the target device. However, it is often sufficient to know the messages being sent to a device. There is no theoretical limit to the size of this message set; however, practical limits may be imposed by the cryptosystem implemented on the device. For example, an attacker may be limited in the number of cryptographic operations that can be executed using the same key. For each message $m$ in this set, an attacker calculates the value of the chosen intermediate variable $f(m, k)$, for each possible key portion $k$.

### Map the hypotheses to power consumption values

The next step for an attacker is to model the power that each hypothesis for $f(m, k)$ would consume, if it was to appear as an intermediate variable during the operation of the device. To do this, an attacker must choose a 'leakage model' for the target device. The leakage model links the data being processed by the device to the side-channel information simultaneously being monitored. For example, in CMOS devices, the power consumption is predominantly dynamic, i.e. most of the power is dissipated when bits change from $1 \rightarrow 0$ or from $0 \rightarrow 1$. Therefore, the Hamming distance model is appropriate in attacks on CMOS devices. However, the countermeasure described in this patent applies for any model, e.g. Hamming weight, Hamming distance, etc.

**Measure the power consumption**

An attacker proceeds to use the cryptographic device to process each of the messages in the chosen message set. As each message is being processed by the cryptographic algorithm, an attacker monitors and records the side-channel information that is leaked via the power consumption. In general, this involves some minor modification to the power circuitry supplying the device. An oscilloscope can be used to capture and record the side-channel information. If possible, the scope is usually adjusted such that the region of the waveform displayed corresponds only to the points in time where the chosen intermediate variable $f(m, k)$ is being processed. The information acquired is termed a 'power trace'.

**Statistical analysis**

Statistical analysis is used to determine which hypothesis for the key portion was correct. Classical DPA partitions the traces and uses a difference-of-means approach for this comparison. However, the most common approach is to use Pearson's correlation coefficient, giving rise to the term Correlation Power Analysis (CPA), where the set of hypotheses corresponding to the correct key portion is processed, the result from the correlation calculation should be significantly greater than for the other hypotheses. In this way, the correct key portion can be identified, and the attack is deemed successful. Side-channel attacks can also be based on electromagnetic (EM) emanations from a device. These EM attacks follow the same set of steps as attacks based on the power consumption. One object of the invention is to provide a DPA countermeasure that can also be used to thwart not only DPA attacks but also attacks based on EM emanations.

**DPA Countermeasures**

In the course of the last decade, resisting DPA attacks has proven to be a formidable challenge for designers of cryptographic hardware and software. Cryptographers ensure that algorithms are free from mathematical weaknesses that would expose the secret key. However, it is the task of hardware and embedded software engineers to ensure that the physical implementations of these algorithms do not introduce weaknesses in the form of side-channel information that could compromise the integrity of the cryptosystem.

The goal of countermeasures against DPA attacks is to make the power consumption of a cryptographic device independent of the intermediate values of the cryptographic algorithm. DPA countermeasures can be classified into two categories: masking and hiding.

**Masking Countermeasures**

Masking countermeasures work by rendering the intermediate variables processed within the device independent of the intermediate variables in the cryptographic algorithm. This independence is achieved by combining each intermediate variable in the cryptographic algorithm with a random value (a 'mask') which changes on each execution of the algorithm. For example, an intermediate variable $x$ can be masked with a random value $r$ via: $x' = x \oplus r$ (this is termed Boolean masking, since the masking operation is Boolean XOR, denoted $\oplus$). Subsequently, it is the masked value $x'$ which appears on the device during the execution of the algorithm, rather than $x$. Since $x'$ is unpredictable to an attacker, DPA attacks are prevented.

Masking can be applied at the architecture level, where random masks are incorporated into high-level functions, such as multiplication or key addition.

Masking can also be implemented at the gate level, where basic cells such as AND and OR gates are modified to incorporate random inputs as well as masked inputs. Secure implementations of cryptographic algorithms, which use these protected cells as building blocks, can subsequently be generated. If masking is applied at either the architecture or the gate level, the implementation should also include mask correction circuitry. This circuitry tracks the modifications to the mask that happen when the masked data is processed by the cryptographic algorithm, so that the mask can be removed at the end of the cryptographic computation. Such mask correction circuitry typically leads to an increase in the implementation area/execution time.

**Hiding Countermeasures**

Hiding countermeasures work by removing the dependence of a cryptographic device's power consumption on the intermediate variables processed within the device. Therefore, hiding countermeasures either attempt to randomise the power consumption or to make it constant, so that no information about the intermediate variables is leaked in the power trace. At the architecture level, hiding can be achieved in reconfigurable devices by randomly inserting dummy operations and clock cycles, randomly changing the order of operations, or randomly changing the clock signal. Another approach is to generate noise on the device, in parallel with the execution of the cryptographic algorithm. At the gate level, hiding countermeasures take the form of secure logic styles. Such logic styles undertake to maintain the same power consumption for every operation performed.

A paper by Christophe Giraud and Emmanuel Prouff entitled "A new approach to counteract DPA attacks on block ciphers" [Private Communication. Previously online at http://eprint.iacr.org/2005/340; withdrawn, September 2007] proposed a general countermeasure to counteract DPA attacks on block ciphers. Their solution was to add a layer $P^0_{k'}$ before the encryption operation and a layer $P_{1k'}$ after, parameterised by a shared secret key $k'$. Each layer consisted of a fixed, linear, involutive diffusion function $\underline{L}$ and a non-linear permutation $\pi_{k'}$. However, the proposed countermeasure of Giraud and Prouff was withdrawn, after weaknesses were discovered in the design. Specifically, the output of the $P^0_{k'}$ layer (i.e. the input to the encryption function) was found to be predictable by an attacker, for inputs of low Hamming weight.

A paper by Kris Tiri, Patrick Schaumont and Ingrid Verbauwhede entitled "Side-channel leakage tolerant architectures" [Third International Conference on Information Technology: New Generations (ITNG 2006), pages 204-209, IEEE Computer Society, 2006] proposed two side channel leakage tolerant architectures. Their aim was to design cryptosystems that would burden the hypothesis phase of a DPA attack, but leave the encryption and decryption operations unmodified. The first general architecture proposed the application of permutations $P_1$ and $P_2$ before and after encryption, respectively. These permutations are dependent on secret permutation keys $K_{p1}$ and $K_{p2}$. However, Tiri et al. do not provide specific constructions of the permutations $P_1$ and $P_2$. Furthermore, they do not discuss how to distribute the secret permutation keys $K_{p1}$ and $K_{p2}$, nor how often these keys should be updated.

The second architecture considered by Tiri, Schaumont and Verbauwhede uses two intertwined CBC mode encryptions to prevent forward and reverse DPA (DPA attacks where hypotheses are made based on known ciphertexts output from the target device). It is noted that the session keys must be updated regularly, to avoid a 'reset' attack, i.e. constantly resetting a device so that the session key remains constant.

The concept of supplementing a cipher with a 'preliminary transform' as a power analysis countermeasure was briefly mentioned in "An overview of power analysis attacks against field programmable gate arrays" by François-Xavier Standaert, Eric Peters, Gaël Rouvroy, and Jean-Jacques Quisquater, [Proceedings of the IEEE, 94 (2):383-394, February 2006]. The authors suggested that such a transform should provide high diffusion, making the values input to the cipher unpredictable.

A paper by Chari et al. Suresh Chari, Charanjit S. Jutla, Josyula R. Rao and Pankaj Rohatgi entitled "Towards Sound Approaches to Counteract Power-Analysis Attacks" [Advances in Cryptology - CRYPTO '99, 19th Annual International Cryptology Conference, pages 398-412, 1999] discusses the concept of a 'general countermeasure' to power analysis attacks. Such countermeasures: "ensure that the adversary cannot predict any relevant bit in any cycle, without making run-specific assumptions independent of the actual inputs to the computation. This makes statistical tests involving several experiments impossible, since the chance of the adversary making the correct assumptions for each run is extremely low".

## Summary of the Invention

Side-channel Attacks (SCA) on hardware implementations of cryptographic algorithms have recently been the focus of much attention in the research community. Differential Power Analysis (DPA) has been shown to be particularly effective at retrieving secret information stored within an implementation. The design of DPA resistant systems that are efficient in terms of speed and area poses a significant challenge. All-or-Nothing Transforms (AONTs) are cryptographic transforms, which are currently employed in numerous applications. The present invention examines All-or-Nothing Encryption systems from the DPA perspective. The present invention shows that All-or-Nothing cryptosystems, whilst not preventing side-channel leakage, do fundamentally inhibit DPA attacks. Furthermore, the present invention provides extensions to the All-or-Nothing protocol to strengthen the DPA resistance of the cryptosystem, providing a practical alternative to the masking countermeasure.

DPA attacks rely on a fundamental condition: somewhere within the device, fixed unknown data "$k$" (the secret) is combined with variable known data "$m$" (data which is known to an attacker). By applying an AONT before applying the cryptographic algorithm, the variable data "$m$" which is processed by the cryptographic algorithm is made unknown to an attacker. The fundamental condition for DPA is broken. Similarly, another transform must be applied after the cryptographic algorithm, to prevent reverse DPA attacks, i.e. DPA attacks based on the ciphertexts output from the device. DPA attacks are of great concern to manufacturers of cryptographic hardware (e.g. smartcards, Chip+PIN cards, SIM cards, cryptographic accelerators). This invention provides a superior alternative to current DPA countermeasures.

According to the present invention there is a method provided for inhibiting Differential Side-Channel Analysis attacks on hardware and embedded software implementations of cryptographic algorithms, the method comprising the steps of: applying an AONT to plaintext to be encoded to form a pseudo message, and encrypting the pseudo message using an encryption function and key to create ciphertext.

According to one embodiment the encryption function and key incorporates a block cipher.

The method may further comprise applying a post-encryption transform to the ciphertext. The post-encryption transform is preferably a partial AONT.

The method may alternatively comprise applying a partial AONT to a public initialisation vector, wherein the output of said partial AONT is used to seed the encryption function.

Alternatively, a predetermined secret random number may be used to seed the encryption function.

It will be appreciated that hardware implementations of cryptographic algorithms could include ASICs or reconfigurable devices such as an FPGA, and that embedded software implementations of cryptographic algorithms could be in the form of a smart card or microprocessor.

Considering the receiving side of a transmission, the method may further comprise decrypting the ciphertext with a decryption function and key to produce a pseudo message, and applying an inverse AONT to the pseudo message to retrieve the plaintext.

The invention further provides a method of encrypting a message to be transmitted, the method comprising the steps of:

a. dividing the message to be transmitted into a plurality of packets,
b. transforming the first of said packets using an AONT with a secret random value to produce a pseudo message packet,
c. encrypting the pseudo-message packet with an encryption algorithm and a secret key to produce an encrypted pseudo-message packet,
d. applying a partial AONT to the encrypted pseudo-message packet using a predetermined secret random value to produce a ciphertext packet for transmission, and
e. repeating steps b. to d. for all remaining packets of the message to be transmitted, wherein for each remaining packet the predetermined secret random value used in step d. is the secret random value used in step b. for the previous packet.

According to one embodiment of the invention, the partial AONT used in step d. is based on the AONT used in step b.

The invention further provides a method of encrypting a message to be transmitted, the method comprising the steps of:

a. dividing the message to be transmitted into a plurality of packets,
b. transforming the first of said packets using an AONT with a secret random value to produce a pseudo message packet,
c. applying a partial AONT to a public initialisation value using a predetermined secret random value,
d. indirectly encrypting the pseudo-message packet with an encryption algorithm and a secret key to produce an encrypted pseudo-message packet, wherein the output of said partial AONT is used to seed the encryption algorithm;
e. repeating steps b. to d. for all remaining packets of the message to be transmitted, wherein for each remaining packet the predetermined secret random value used in step d. is the secret random value used in step b. for the previous packet.

The invention further provides a method of encrypting a message to be transmitted, the method comprising the steps of:

a. dividing the message to be transmitted into a plurality of packets,
b. transforming the first of said packets using an AONT with a secret random value to produce a pseudo message packet,
c. indirectly encrypting the pseudo-message packet with an encryption algorithm and a secret key to produce an encrypted pseudo-message packet, wherein a predetermined secret random value is used to seed the encryption algorithm;
d. repeating steps b. and c. for all remaining packets of the message to be transmitted, wherein for each remaining packet the predetermined secret random value used in step c. is the secret random value used in step b. for the previous packet.

Said pseudo message packet may comprise a plurality of pseudo-message blocks, and step of indirectly encrypting may comprise encrypting a subset of said pseudo-message blocks with an encryption algorithm and a secret key to produce at least one encrypted pseudo-message block; and forming a ciphertext packet comprising at least one pseudo message block and at least one encrypted pseudo-message block. The method may further comprise the step of assembling the ciphertext packets into a ciphertext message.

Preferably said step of transforming comprises applying an expansion function to a random value.

The method may further comprise hashing the output of the partial AONT and using same to mask the predetermined secret random value. In other words, the AONT may be considered in two parts, the Expansion Function and the Hash Function.

It will be appreciated that the secret key and the secret random values are preferably known to both the sender and receiver of the transmission only.

Preferably the secret random values have a bit length $\geq$ 128 bits. The method may further comprise padding the plaintext to match the bit length of the secret random value.

The pseudo message packet may comprise a plurality of pseudo-message blocks, and said step of encrypting may comprise encrypting a subset of said pseudo-message blocks with an encryption algorithm and a secret key to produce at least one encrypted pseudo-message block. In addition, said step of applying a partial AONT may comprise applying a partial AONT to each encrypted pseudo-message block using a secret predetermined random number, and forming a ciphertext packet comprising at least one pseudo message block and at least one encrypted pseudo message block to which the partial AONT has been applied. The method may further comprise the step of assembling the ciphertext packets into a ciphertext message.

In this respect, the invention further provides a method of encrypting a message to be transmitted, the method comprising the steps of:

a. dividing the message to be transmitted into a plurality of packets,
b. transforming the first of said packets using an AONT with a secret random value to produce a pseudo message packet having a plurality of pseudo-message blocks,
c. encrypting a subset of said pseudo-message blocks with an encryption algorithm and a secret key to produce at least one encrypted pseudo-message block,
d. applying a partial AONT to each encrypted pseudo-message block using a secret predetermined random number,
e. forming a ciphertext packet comprising at least one pseudo message block from step b. and at least one encrypted pseudo message block from step d. to which the partial AONT has been applied;
f. repeating steps b. to e. for all remaining packets of the message to be transmitted, wherein for each remaining packet the predetermined random number used in step d. is the secret random value used in step b. for the previous packet; and
g. assembling the ciphertext packets into a ciphertext message.

The AONT may be based on an OAEP AONT. Likewise, the AONT may be based on a CTRT transform.

The invention further provides a method of decrypting a received message, the method comprising the steps of:

a. processing the first received packet of the message using an inverse partial AONT using a predetermined secret random value to produce an encrypted pseudo-message packet,
b. decrypting the encrypted pseudo-message packet with a decryption algorithm and a secret key to produce a pseudo message packet,
c. applying an inverse AONT to the pseudo message packet to generate a message packet and a secret random value,
d. repeating steps a. to c. for all remaining packets of the received message, wherein for each remaining packet the predetermined secret random value is the secret random value that was generated in step c. for the previous packet,
e. reassembling the decrypted message packets to form a decrypted message.

The received message may be a ciphertext comprising a plurality of packets, each comprising at least one encrypted pseudo message block and at least one unencrypted pseudo message block, and wherein:

the step of processing may comprise processing each encrypted pseudo message block of a first packet using an inverse partial AONT using a predetermined secret random value to produce at least one encrypted pseudo-message block, and wherein:

the step of decrypting may comprise decrypting each encrypted pseudo-message block with a decryption algorithm and a secret key to produce at least one pseudo message block, and combining the at least one pseudo message block with the at least one unencrypted pseudo message block into a pseudo message packet.

In accordance with such, the invention further provides a method of decrypting a received ciphertext comprising a plurality of packets, each comprising at least one encrypted pseudo message block and at least one unencrypted pseudo message block, the method comprises the steps of:

a. processing each encrypted pseudo message block of a first packet using an inverse partial AONT using a predetermined secret random value to produce at least one encrypted pseudo-message block,
b. decrypting each encrypted pseudo-message block with a decryption algorithm and a secret key to produce at least one pseudo message block,
c. combining the at least one pseudo message block with the at least one unencrypted pseudo message block into a pseudo message packet;
d. applying an inverse AONT to the pseudo message packet to generate a message packet and a secret random value,
e. repeating steps a. to d. for all remaining packets of the received message, wherein for each remaining packet the predetermined secret random value is the secret random value generated in step c. for the previous packet,
f. reassembling the decrypted message packets to form a decrypted message.

There is further provided a method of decrypting a received message, the method comprising the steps of:

a. applying a partial AONT to a public initialisation value using a predetermined secret random value,
b. decrypting the first received packet with a decryption algorithm and a secret key to produce a pseudo message packet, wherein the output of the partial AONT is used to seed the decryption algorithm;
c. applying an inverse AONT to the pseudo message packet to generate a message packet and a secret random value,
d. repeating steps a. to c. for all remaining packets of the received message, wherein for each remaining packet the predetermined secret random value is the secret random value that was generated in step c. for the previous packet,
e. reassembling the decrypted message packets to form a decrypted message.

There is further provided a method of decrypting a received message, the method comprising the steps of:

a. decrypting the first received packet with a decryption algorithm and a secret key to produce a pseudo message packet, wherein a predetermined secret random value is used to seed the decryption algorithm;
b. applying an inverse AONT to the pseudo message packet to generate a message packet and a secret random value,
c. repeating steps a. and b. for all remaining packets of the received message, wherein for each remaining packet the predetermined secret random value is the secret random value that was generated in step c. for the previous packet,
d. reassembling the decrypted message packets to form a decrypted message.

The received message may be a ciphertext comprising a plurality of packets, each comprising at least one encrypted pseudo message block and at least one unencrypted pseudo message block, and wherein the step of decrypting may comprise decrypting each encrypted pseudo-message block with a decryption algorithm and a secret key to produce at least one pseudo message block, and combining the at least one pseudo message block with the at least one unencrypted pseudo message block into a pseudo message packet.
There is also provided a computer program comprising program instructions for causing a computer program to carry out any of the above methods which may be embodied on a record medium, carrier signal or read-only memory.
The invention further provides a system for inhibiting Differential Side-Channel Analysis attacks on hardware implementations of cryptographic algorithms and implementations of same in embedded software, the system comprising:

means for applying an AONT to plaintext to be encoded to form a pseudo message, and
means for encrypting the pseudo message using an encryption function and key to create ciphertext.

The invention further provides a system for encrypting a message to be transmitted, the system comprising:

means for dividing the message to be transmitted into a plurality of packets,

means for transforming each of said packets using an AONT with a secret random value to produce, for each packet, a pseudo-message packet,

means for encrypting each pseudo-message packet with an encryption algorithm and a secret key to produce, for each pseudo-message packet, an encrypted pseudo-message packet, and

means for applying a partial AONT to each encrypted pseudo-message packet using a predetermined secret random value to produce, for each encrypted pseudo-message packet, a ciphertext packet for transmission,

wherein for each packet, the predetermined secret random value used by said means for applying a partial AONT, is the secret random value used by the means for transforming for the previous packet.

The invention further provides a system for encrypting a message to be transmitted, the system comprising:

means for dividing the message to be transmitted into a plurality of packets,

means for transforming each of said packets using an AONT with a secret random value to produce, for each packet, a pseudo message packet,

means for applying a partial AONT to a public initialisation value using a predetermined secret random value,

means for indirectly encrypting each pseudo-message packet with an encryption algorithm and a secret key to produce, for each pseudo-message packet, an encrypted pseudo-message packet, wherein the output of said partial AONT is used to seed the encryption algorithm;

wherein for each packet, the predetermined secret random value used by said means for applying a partial AONT, is the secret random value used by the means for transforming for the previous packet.

The invention further provides a system for encrypting a message to be transmitted, the system comprising:

means for dividing the message to be transmitted into a plurality of packets,

means for transforming each of said packets using an AONT with a secret random value to produce, for each packet, a pseudo message packet,

means for indirectly encrypting each pseudo-message packet with an encryption algorithm and a secret key to produce, for each pseudo-message packet, an encrypted pseudo-message packet, wherein a predetermined secret random value is used to seed the encryption algorithm;

wherein for each packet, the predetermined secret random value used to seed the encryption algorithm is the secret random value used by the means for transforming, for the previous packet.

The invention further provides a method of encrypting a message to be transmitted, the method comprising the steps of:

a. dividing the message to be transmitted into a plurality of packets,

b. transforming the first of said packets using an AONT with a secret random value to produce a pseudo message packet,

c. indirectly encrypting the pseudo-message packet with an encryption algorithm and a secret key to produce an encrypted pseudo-message packet, wherein a predetermined secret random value is used to seed the encryption algorithm;

d. repeating steps b. and c. for all remaining packets of the message to be transmitted, wherein for each remaining packet the predetermined secret random value used in step c. is the secret random value used in step b. for the previous packet.

The invention further provides a system for encrypting a message to be transmitted, the system comprising:

means for dividing the message to be transmitted into a plurality of packets,

means for transforming each packet using an AONT with a secret random value to produce, for each packet, a pseudo message packet having a plurality of pseudo-message blocks,

means for encrypting a subset of said pseudo-message blocks with an encryption algorithm and a secret key to produce at least one encrypted pseudo-message block,

means for applying a partial AONT to each encrypted pseudo-message block using a secret predetermined random number,

means for forming a ciphertext packet comprising at least one pseudo message block produced by said means for transforming and at least one encrypted pseudo message block produced by said means for applying a partial AONT; and

means for assembling the ciphertext packets into a ciphertext message;

wherein for each packet, the predetermined secret random value used by said means for applying a partial AONT, is the secret random value used by the means for transforming for the previous packet.

The invention further provides a system for decrypting a received message comprising a plurality of packets, the system comprising:

means for processing each received packet of the message using an inverse partial AONT using a predetermined secret random value to produce, for each received packet, an encrypted pseudo-message packet;
means for decrypting each encrypted pseudo-message packet with a decryption algorithm and a secret key to produce, for each encrypted pseudo-message packet, a pseudo message packet;
means for applying an inverse AONT to each pseudo message packet to generate, for each pseudo message packet, a message packet and a secret random value;
means for reassembling the decrypted message packets to form a decrypted message;

wherein for each packet, the predetermined secret random value used by said means for applying a partial AONT, is the secret random value used by the means for transforming for the previous packet.

The invention further provides a system for decrypting a received ciphertext comprising a plurality of packets, each comprising at least one encrypted pseudo message block and at least one unencrypted pseudo message block, the system comprising:

means for processing each encrypted pseudo message block of each packet using an inverse partial AONT using a predetermined secret random value to produce, for each packet, at least one encrypted pseudo-message block,
means for decrypting each encrypted pseudo-message block with a decryption algorithm and a secret key to produce, for each packet, at least one pseudo message block,
means for combining, for each packet, the at least one pseudo message block with the at least one unencrypted pseudo message block into a pseudo message packet;
means for applying an inverse AONT to each pseudo message packet to generate a message packet and a secret random value, and
means for reassembling the decrypted message packets to form a decrypted message;

wherein for each packet, the predetermined secret random value used by said means for applying a partial AONT, is the secret random value used by the means for transforming for the previous packet.

The system of the invention may be adapted to carry out any of the above methods. Any of the above systems may be computer implemented systems.

In industry, one of the most commonly used DPA countermeasure is "masking". This involves modifying the cryptographic algorithm to include a random mask, which changes on each execution of the algorithm.

The advantages of the present invention over masking are:

- Speed. Masking slows down the calculation of a cryptographic algorithm. In our invention, computing the two transforms introduces some overhead, but the calculation time taken by our invention is less than the time taken in a masked implementation.
- Area. Masking in dedicated hardware causes the area of the circuit/code size to increase. Our invention requires area to calculate the two transforms, but these circuits/code could be re-used in other cryptographic protocols, leading to enhanced area efficiency.
- Flexibility. Masking schemes are designed for specific cryptographic algorithms. Our invention can be used with any encryption algorithm, without modification to the algorithm. This allows the use of off-the-shelf "plug-and-play" encryption modules.

**Brief Description of the Drawings**

The invention will be more clearly understood from the following description of one or more embodiments thereof, given by way of example only, with reference to the accompanying drawings, in which:-

Figure 1 shows All-or-Nothing Encryption, and All-or-Nothing encryption and decryption protocols.
Figure 2 shows OAEP and Inverse-OAEP Protocols.
Figure 3 shows a CTR Transform (CTRT) and Inverse CTRT.
Figure 4 shows a general model for All-or-Nothing Transforms.
Figure 5 shows the information available to DPA attacker during All-or-Nothing Encryption.
Figure 6 shows an extended All-or-Nothing Encryption protocol according to the present invention.

Figure 7 shows an extended All-or-Nothing Encryption protocol, with Partial AONT according to the present invention.
Figure 8 shows prior art All-or-Nothing Encryption, using OFB mode.
Figure 9 shows Extended All-or-Nothing Encryption protocols for OFB mode according to the present invention.
Figure 10 is a simplified protocol of the protocol represented in figure 9, in accordance with the present invention.
Figure 11 shows Extended All-or-Nothing Encryption combined with Efficient Encryption according to the present invention.

## Detailed Description of the Drawings

The present invention achieves DPA resistance while maintaining efficiency, in contrast to current DPA countermeasures, which are often inefficient from the perspectives of speed and area.

All-or-Nothing Transforms (AONTs) are unkeyed probabilistic transforms, with numerous applications in cryptography. They were originally proposed by Rivest, as a means of complicating brute force key searches on block ciphers with short key lengths. Essentially, All-or-Nothing Encryption (AONE) consists of two stages. By applying an AONT to a plaintext message, a 'pseudo- message' is formed. Retrieval of the plaintext depends on possession of all the bits of the pseudo-message. This preprocessing stage is not considered encryption, however, as the AONT does not use a secret key. An All-or-Nothing Encryption mode is formed when the pseudo-message is encrypted using a symmetric or asymmetric cipher.

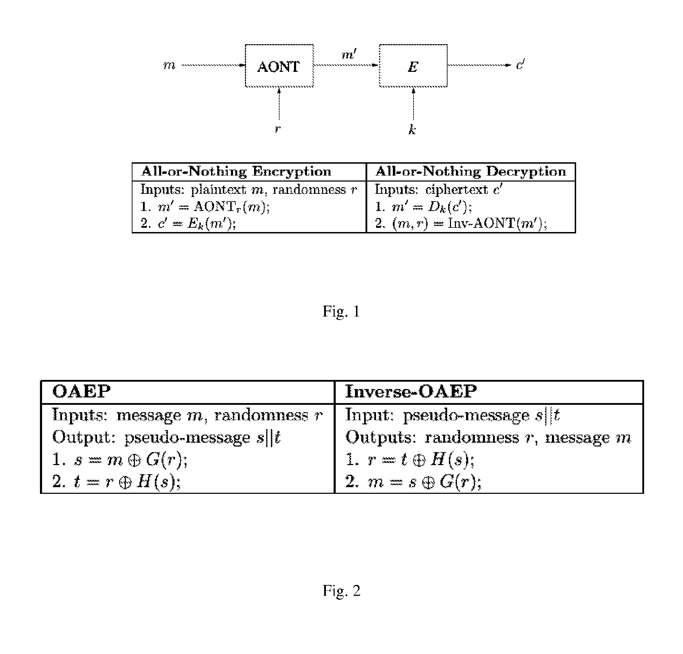

Figure 1 shows a representation of an All-or-Nothing Encryption. An All-or-Nothing Transform $f$ uses a random string $r$ to map a plaintext message $m$, (of variable length) to a pseudo-message $m'$. The pseudo-message is subsequently encrypted with an encryption function $E$ and key $k$; for example, using a symmetric block cipher such as AES.

All-or-Nothing decryption allows the receiver to recover the message the $m$ from the transmitted ciphertext $c'$. The receiver applies the decryption function D with key $k$ to recover $m'$. Subsequently, the inverse AONT is applied, to recover r and $m$. The All-or-Nothing encryption and decryption protocols are also illustrated in Figure 1.

The resulting cryptosystem has the property that a brute force attacker must decrypt all of the ciphertext blocks when testing each key. Hence, the average execution time of a brute force attack on an AONE mode is increased, in proportion to the number of blocks in the ciphertext. The following discussion of the invention focuses on block cipher-based symmetric- key cryptosystems, however, we note that the method of the present invention can also be applied to protect asymmetric encryption schemes against DPA.

AONTs should possess four properties:

1. The transform should be invertible. Given the entire pseudo-message, one can invert the transform to retrieve the plaintext.
2. Both the AONT and its inverse should be efficiently computable.
3. All AONTs should be randomised, in order to avoid chosen-message and known-message attacks on the encryption mode.
4. If any $l$ (or more) bits of the pseudo-message are unknown, it should be computationally infeasible to invert the AONT, or determine any function of the plaintext bits. We call this the "All-or-Nothing" property. The value of $l$ is AONT-dependent, but is large enough to deter brute force attacks on the pseudo-message.

Property 3 implies that pseudo-message $m'$ is not a deterministic function of the plaintext m. In order to fulfil this requirement, an AONT will require a random string r when computing $m'$ from $m$. It is this probabilistic aspect of All-or-Nothing encryption that provides protection against differential side- channel attacks.

## Applications and Constructions

As mentioned above, AONTs were originally introduced to hinder brute force key searches in cryptosystems with short key lengths, such as the 56-bit DES key. Of course, modem ciphers utilise longer keys (AES has keys with bit lengths $\geq 128$), which makes this original application of AONTs redundant, for now. Indeed, it is believed that 128-bit symmetric keys will be secure until after 2030. However, AONTs have since found other useful applications in cryptography.

AONTs can be used to build 'chaffing and winnowing' and gap secret sharing schemes. The role of AONTs has been examined in 'exposure- resilient cryptography', i.e. protecting implementations of cryptographic algorithms against partial key exposure. We note that this idea is relevant to the present-day problem of secure key storage in cryptographic devices that are vulnerable to physical attacks.

AONTs are also an important part of remotely keyed encryption and efficient encryption protocols. Many candidate AONT constructions have been proposed in the literature. OAEP (Optimal Asymmetric Encryption Padding) and the CTR Transform are demonstrated as case studies below. Other possible transforms to which the method of the present invention can be applied include: Package Transform, Exposure-Resilient Function-based Transforms, Quasigroup-based AONTs, 'Extended-Indistinguishable' AONTs, and Error-Correcting Code-based AONTs.

The operations used by Optimal Asymmetric Encryption Padding (OAEP) are recalled in Figure 2, where $s\|t$ denotes concatenation of the strings $s$ and $t$, and $\oplus$ denotes Boolean XOR. Functions $G$ and $H$ are random oracles. OAEP forms the basis of a routine called Encoding Method for Encryption #1 (EME1). According to the standard, functions $G$ and $H$ should be instantiated using a mask generation function called MGF1, the length of whose output is user-specified. MGF1 is based on repeated iterations of a secure one-way hash function, such as SHA-256. $H$ produces a mask whose length is shorter than its input, whilst $G$ expands its input.

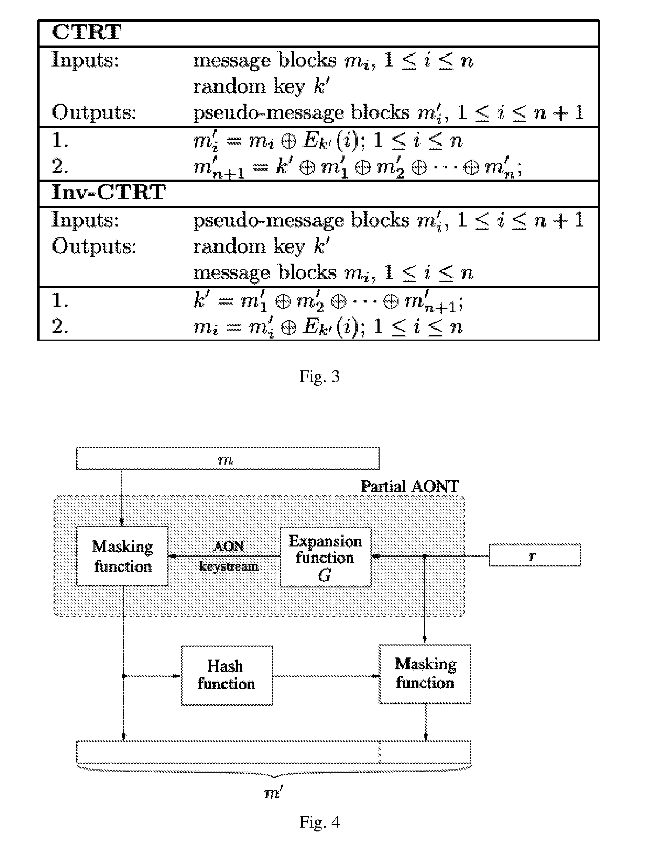

The CTR Transform is illustrated in Figure 3. While constructions of OAEP are based on hash functions, CTRT is built for symmetric-key cryptosystems using a block cipher $E$, such as AES. Both OAEP and CTRT conform to a general model for AONTs, shown in Figure 4.

In the general AONT model used in the present invention, an expansion function $G$ uses the random input $r$ to produce an "All-or-Nothing keystream", the same length as the message $m$. Since $r$ changes for each new message $m$, the AON keystream $G(r)$ can be viewed as a type of one-time pad. In OAEP, the expansion function is realised using MGF1, which makes repeated calls to a hash function such as SHA-256. For CTRT, the expansion function is instantiated using by a block cipher in CTR mode, essentially turning the block cipher into a stream cipher.

Subsequently, this AON keystream is used to mask the message $m$. In both OAEP and CTRT, the masking function is simply Boolean XOR. In this way, the majority of the pseudo-message bits are generated. We call this sequence of operations a "partial AONT".

However, the partial AONT does not possess the All-or-Nothing property, nor is it invertible. To effectuate these properties, the sender must communicate the value of the random value $r$ to the receiver. This is achieved by hashing the output of the partial AONT, and using it to mask the random value $r$. In OAEP, a cryptographic hash function is used for this purpose; in CTRT, the pseudo-message blocks are simply XOR-ed together. This final step completes the AONT, ensuring that the entire pseudo-message is required by the receiver, in order to retrieve $r$ and invert the transform.

## DPA Resistance of AONE Systems

As discussed above, all differential side-channel attacks include a hypothesis phase, where an attacker predicts all the possible values of some intermediate word(s) inside the encryption or decryption device. These hypotheses are based on knowledge of some data (usually the plaintext $m$), and a guess of a small portion (e.g. 8 bits) of the secret key $k$. In the analysis phase of the attack, the acquired traces are used to validate the correct hypothesis for the intermediate word(s), and reveal $k$.

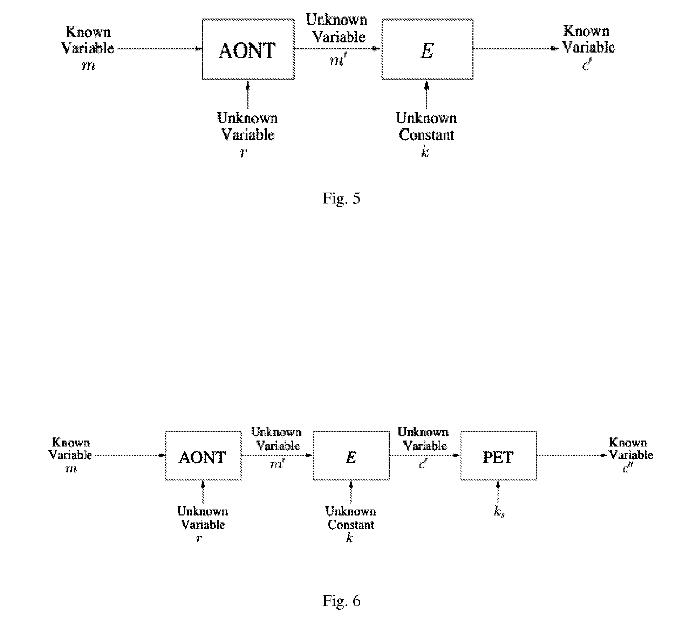

In All-or-Nothing encryption, however, the plaintext $m$ is pre-processed along with a random string $r$. The random string is generated within a device so that a user (attacker) will not have access to it. It is the resulting pseudo-message $m'$ that is operated upon by the encryption algorithm $E$ and key $k$. As illustrated in Figure 5, an attacker no longer knows the data $m'$ that is input to the encryption algorithm, because the AONT is probabilistic. The random input $r$ changes on each application of the AONT, mapping $m$ to a different $m'$ each time. Therefore, the hypothesis phase of the attack cannot be performed. An attacker may try to compute all possible pseudo-messages $m'$ that could result from transforming a known plaintext $m$, and then continue with her hypothesis phase. Such a counter-strategy can be rendered impractical by using a random value in the AONT with a large enough bit length, e.g. $\geq$ 128 bits. For short messages, e.g. < 128 bits, it is necessary to pad $m$ with zeros, so that the length of the pseudo-message is 128 bits, and the pseudo-message remains unpredictable to an attacker.

## Reverse DPA

We note that All-or-Nothing encryption inhibits an attacker's ability to form hypotheses based on the plaintext messages being processed, but does not prevent hypotheses based on the resultant ciphertexts. For example, consider the case where the encryption is performed using an iterated block cipher such as DES or AES. Application of the AONT protects the first rounds, but not the last rounds. Based on the known ciphertext $c'$, an attacker can focus on the last round, work backwards and use DPA to recover successive round keys. This type of attack is sometimes termed 'reverse DPA'. To prevent reverse DPA on an All-or-Nothing encryption system, a suitable countermeasure could be introduced to prevent an attack based on knowledge of the ciphertexts, such as masking the last two or three encryption rounds.

On the receiver side, All-or-Nothing decryption provides similar DPA resistance. Here, the presence of the inverse-AONT ensures that an attacker cannot form hypotheses based on the plaintexts output from the decryption device. Of course, an attacker can still form hypotheses based on the ciphertexts input to the decryption device. Therefore, as above, it is necessary to supplement All-or-Nothing decryption with some other countermeasure, such as masking of the first two or three decryption rounds. The present invention extends the traditional All-or-Nothing encryption and decryption modes, and provides a system that is fully resistant to DPA attacks, without the need for masking that is specific to the encryption function.

**Further Considerations**

Clearly, the security of the source of random values used by the AONT is important. If the source was compromised (by a side-channel attack or by other means), then an attacker could easily calculate the pseudo-messages and form hypotheses, as in a normal DPA attack. A cryptographically secure pseudo-random number generator should be a component of most pieces of cryptographic hardware. Therefore, we do not regard the source of random values as a weak link in the AONE scheme.

It is important to note that the DPA resistance of an AONE scheme depends on the encryption mode being used. The discussion above assumes that an encryption mode is in use whereby the plaintext is operated upon directly by the encryption function, such as Electronic Codebook (ECB) mode or Cipher-block Chaining (CBC) mode. However, modes such as Output Feedback (OFB) mode or Counter (CTR) mode do not process the plaintext directly; instead, the plaintext is combined with a keystream using an XOR operation. For DPA attacks on such modes of encryption, the plaintext is not used to make hypotheses about intermediate variables in the encryption function.

**Fully DPA-Resistant All-or-Nothing Encryption**

It has been demonstrated above how All-or-Nothing encryption systems exhibit increased resistance to differential side-channel attacks, over standard encryption systems. However, we noted that in order to achieve full resistance to such attacks, it was necessary to supplement the AONT with the masking countermeasure. Masking circuitry is specific to the encryption algorithm and is costly in terms of the area used in a hardware implementation. Therefore, a DPA-resistant scheme requiring no masking is desirable. In the following description, an extension to the traditional All-or-Nothing encryption/decryption modes is made, with the aim of developing a fully DPA-resistant system.

**Required Properties**

All-or-Nothing encryption renders the first rounds of an encryption scheme DPA-resistant, because of the unpredictability of the pseudo-message $m'$. An extension to the protocol is therefore required that provides similar DPA-resistance for the last rounds of the encryption scheme. This suggests that we apply a Post- Encryption Transform (PET) to $c'$, the output of the encryption stage. This transform can be reversed on the decryption side by applying the corresponding Pre-Decryption Transform (PDT). The PET would render $c''$ unpredictable to an attacker, even with knowledge of the transmitted ciphertext $c''$. In addition to the encryption function output $c'$, we allow the PET to accept another input $k_s$, which will be defined later. We call this scheme "Extended All-or-Nothing Encryption", and it is illustrated in Figure 6. Again, we note that our focus is on protecting encryption modes where the plaintext is directly processed by the encryption function; other encryption modes will be considered below.

Below, we discuss the properties required by the PET, in order to construct such an Extended All-or-Nothing protocol. We confine our discussion to the construction of PETs, as the construction of the corresponding PDT is determined once a PET is chosen.

Property 1: A post-encryption transform, which prevents DPA hypotheses based on the ciphertext, should be dependent on a shared secret $k_s$.

Ordinary AONTs (and their inverses) are unsuitable as post-encryption transforms providing ciphertext unpredictability. If the PET can be reversed by the legitimate receiver, then it can also be reversed by an attacker. Therefore, in order for a PET to be invertible by the legitimate receiver and not by an attacker, it should include some element $k_s$ known exclusively to the sender and receiver. For example, $k_s$ could be equal to or derived from the shared secret key $k$. This property applies to any PET, and not only to PETs based on AONTs.

Property 2: A post-encryption transform, which prevents DPA hypotheses based on the ciphertext, should not linearly combine the output of the encryption stage with a constant.

Given Property 1, a natural construction might be to use an expansion function $G$ on the shared secret $k_s$, such that $G(k_s)$ was the same length as $c'$. Then, the PET could use Boolean XOR to mask the ciphertext:

$$c'' = c' \oplus G(k_s) \tag{1}$$

An eavesdropper cannot remove $G(k_s)$ and recover $c'$, since $k_s$ is known only to the sender and the receiver. However, $G(k_s)$ is also an unknown constant. For block ciphers such as AES, the last stage of the encryption is an XOR with the final round key $k_f$, which is also fixed and unknown. If the above scheme was used in conjunction with AES, an attacker could mount a reverse DPA attack on the final encryption round, combining $k_f$ and $G(k_s)$, and making hypotheses about the value of $(k_f \oplus G(k_s))$. Therefore, PETs should avoid constructions that combine $c'$ with a constant value, since this can be overcome by an attacker.

Property 3: A post-encryption transform, which prevents DPA hypotheses based on the ciphertext, should itself be DPA resistant.

This final property may seem obvious; however, it is important to emphasise. When constructing PETs, it may seem reasonable to combine the shared secret $k_s$ (required by Property 1) with some variable data $d$. However, if this data is known to an attacker, then the focus of the DPA attack shifts from the encryption operation to the PET. Since $k_s$ is fixed and unknown, and $d$ is variable and known, the secret parameter $k_s$ can be recovered via a DPA attack. Knowledge of $k_s$ allows an attacker to remove the PET and apply reverse DPA on $c'$, the exposed output of the encryption function. Therefore, care should be taken in the construction of PETs to ensure that the transforms themselves are DPA resistant.

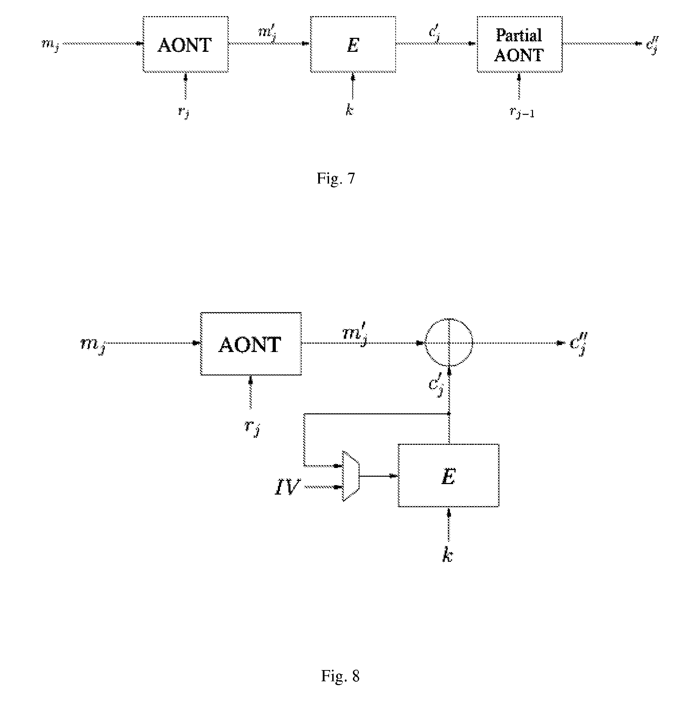

The present invention provides a post-encryption transform, which possesses all of the required properties. The PET construction draws on the general AONT model presented above. Using a partial AONT as the PET, a new All-or- Nothing encryption protocol was constructed, providing DPA resistance to the encryption function. A block diagram of the protocol is shown in Figure 7. The steps of the encryption protocol are as follows:

**Encryption Protocol**

1. At the beginning of the communications session, the sender and receiver must agree on a secret key $k$ and a secret initial random value $r_0$. It is important that the initial random valuer $r_0$ is not made public, otherwise a DPA attacker could use $c''_1$ to retrieve $c'_1$. By continually resetting the target device, an attacker could gather many different values of $c'_1$, and use this knowledge and the corresponding power traces to mount a reverse DPA attack on the encryption algorithm.

2. The message $m$ to be transmitted is divided into packets $m_j$, $1 \leq j \leq N$ The size of the packets depends on the particular transmission protocol in use by the communications system.

3. The value of $j$ is set to 1.

4. Packet $m_j$ is transformed using AONT with random value $r_j$, producing a pseudo-message packet $m'_j$

5. The pseudo-message packet $m'_j$ is encrypted with the encryption algorithm E and secret key $k$. If $E$ is a block cipher, then it may be applied several times, as the length of $m'_j$ may exceed the block size of the cipher. The result is an encrypted pseudo-message packet $c'_j$.

6. A partial AONT is then applied to $c'_j$. However, a new random value is not used; instead, the random value $r_{j-1}$ is re-used. Clearly, it is advantageous to base the partial AONT on the same AONT that is used in the pre- encryption transform. In this way (for $(2 \leq j \leq N)$, the sender does not need to fully recompute $G(r_{j-1})$, the All-or-Nothing keystream that was generated by using the expansion function on $r_{j-1}$, because it was already computed while $m'_{j-1}$ was being generated. An extra block of $G(r_{j-1})$ does need to be generated, however, since the bit length of $m'$ is greater than that of $m$.

7. The output of this post-encryption transform is ciphertext packet $c''_j$, which is transmitted to the receiver. The value of $j$ is incremented.

8. Steps 4 - 7 are repeated, until all $N$ blocks in the message have been processed.

**Decryption Protocol**

At the receiver side, the steps of the corresponding decryption protocol are as follows:

1. The secret key $k$ and secret initial random valuer $r_0$ are agreed upon with the sender at the start of the communications session.

2. The value of $j$ is set to 1.

3. Packet $c_j'$ is received, and is processed using the (inverse) partial AONT with random value $r_{j-1}$, to produce $m_j'$

4. Packet $c_j$ is decrypted using secret key $k$ and $D$, the decryption algorithm corresponding to $E$. Depending on the size of $c_j'$ several c $m_j'$ o $D$ may be required. The result of the decryption stage is packet $m_j'$.

5. Once all of the bits of $m_j'$ have been determined, the inverse AONT is applied to it, generating $m_j$ and $r_j$. The value of $j$ is incremented.

6. Steps 3 - 5 are repeated, until all N packets of the received message have been processed. Finally, the $m_j$ blocks are reassembled to form the message $m$.

**Indirect Encryption Modes**

The protocols described above provide the encryption function with DPA resistance. Neither the input $m'$ nor the output $c'$ of the encryption function are known by an attacker; therefore, the hypothesis phase of the DPA attack is infeasible. This property holds for encryption modes where the pseudo- message $m'$ is operated upon directly by the encryption function, such as ECB mode or CBC mode. For encryption modes where $m'$ is not a direct input to the encryption function, the Extended All-or-Nothing protocol must be adjusted, so that the same level of DPA resistance is provided. For the purposes of this discussion, we term these encryption modes such as OFB and CTR as "indirect encryption modes".

Figure 8 shows a block diagram of an All-or-Nothing encryption protocol using an indirect encryption mode. Essentially, the block cipher $E$ is used as a stream cipher, with secret key $k$ and public initialisation vector IV. The keystream $c_j'$ that is generated is made up of blocks $c_i$ of size $b$, where $1 \leq i \leq$ **B**, $b$ is the block size of the cipher, and $B$ is the number of blocks in $m$.

Typically, the initial input to the cipher is based on $IV$, and subsequent inputs are dependent on the block number $i$. For example, in CTR mode, the cipher input may comprise $(IV\|i)$. For OFB mode, the cipher input is equal to $IV$ for $i = 1$, and $c_{i-1}$ thereafter.

In an indirect All-or-Nothing Encryption mode, the generated keystream packet $c_j'$ is XOR-ed with the pseudo-message packet $m_j'$ producing the ciphertext packet $c_j''$. The natural focus for a DPA attack on such a protocol would be at the input to the encryption function $E$, since the initialisation vector $IV$ is a known variable. It is interesting to note that a reverse DPA attack on this protocol is not possible. Even though an attacker has access to the transmitted ciphertext packet $c_j''$, the output of the encryption function $c_j'$ is obscured by the XOR with pseudo-message $m_j'$. Therefore, the presence of the AONT thwarts reverse DPA attacks on indirect encryption modes. Conversely, it was observed above that the presence of an AONT thwarts regular ('forward') DPA attacks on direct encryption modes.

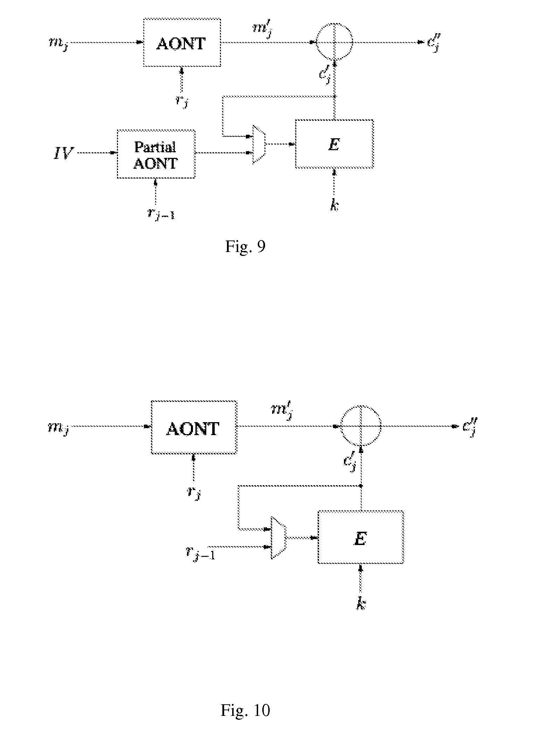

In order to protect the scheme against DPA, the input to the encryption function E must be rendered unpredictable to an attacker. This could be achieved by using a pre-encryption transform. As in the case of the post-encryption transform, we could make use of a partial AONT. By processing the $IV$ for packet $j$ with a partial AONT utilising random values $r_{j-1}$, the input to the encryption function becomes unpredictable to an attacker, as illustrated in Figure 9. In fact, since the output of the partial AONT is simply used as a seed to produce the keystream $c'$, the $IV$ is not required. Therefore, the $IV$ input to the encryption function can simply be replaced by $r_{j-1}$, to make the input to the encryption function unpredictable to an attacker. This Extended AONE protocol is shown in Figure 10 for OFB mode encryption. In the case of CTR mode, the input to the encryption function is simply changed from $(IV\|i)$ to $(r_{j-1}\|i)$. The initial random value $r_0$ can be determined during the key set up phase.

It has been described how All-or-Nothing encryption schemes can be augmented to bring DPA resistance to implementations of the encryption and decryption operations. This can be regarded as a DPA countermeasure at the protocol level. Below, we compare this new solution with previous, related work.

All-or-Nothing encryption can be viewed as a type of masking countermeasure at the algorithm level. For each message packet $m_j$ to be encrypted, the AONT uses a new random 'mask' $r_j$. The AONT expands the random values in $r_j$, and uses it to mask all of the bits of the message $m_j$. Therefore, the masked message $m_j'$ is unpredictable to a DPA attacker. Similarly, the output of the encryption operation $c_j'$ is unpredictable to an attacker, because it is concealed using $r_{j-1}$. This DPA countermeasure differs from previously proposed masking schemes in the literature, because mask correction is not applied. Mask correction ensures that the ciphertext c that is transmitted is the same string that would have been generated by encrypting the message using an unprotected implementation of the encryption algorithm. On the other hand, in Extended All-or-Nothing Encryption, the ciphertext $c''$ that is transmitted is not the same string that would have been generated by an unprotected implementation of the encryption algorithm. In a sense, the 'mask correction' required to retrieve the message $m$ is applied at the receiver side by the decryption protocol, when the inverse AONT is calculated. Below, the performance of the new protocol is compared to that of masking countermeasures.

Giraud and Prouff proposed a general countermeasure to counteract DPA attacks on block ciphers. Their solution was to add a layer $P_{k'}^0$ before the encryption operation and a layer $P_{k'}^1$ after, parameterised by a shared secret key $k'$. Each layer consisted of a fixed, linear, involutive diffusion function $L$ and a non-linear permutation $nk'$.

Clearly, this structure is similar to that of the Extended All-or-Nothing Encryption algorithm proposed above. The main similarity lies in the fact that the encryption operation is unmodified, and transforms are applied before and after the encryption function in order to achieve DPA resistance. Furthermore, the pre- and post-encryption transforms depend on a shared secret. However, the proposed countermeasure of Giraud and Prouff was withdrawn, after weaknesses were discovered in the design. Specifically, the output of the $P_{k'}^0$ layer (i.e. the input to the encryption function) was found to be predictable by an attacker, for inputs of low Hamming weight. This weakness is not present in the Extended All-or-Nothing Encryption protocol. The AONT input $m$ is combined with the pseudo-random sequence $G(r)$ before being operated upon by the encryption function. Even if $m$ is of low Hamming weight, the pseudo-random values of the pseudo-message is unaffected; therefore, $m'$ remains unpredictable. As noted above, the random value r used by the AONT is long enough such that predicting $r$ (in an effort to predict $m$) is not feasible for an attacker.

As mentioned above, Tiri, Schaumont and Verbauwhede proposed two 'side-channel leak-age tolerant architectures'. Their aim was to design cryptosystems that would burden the hypothesis phase of a DPA attack, but leave the encryption and decryption operations unmodified.

This defence against DPA attacks is similar to that accomplished by the Extended All-or-Nothing Encryption algorithm. In fact, Extended All-or-Nothing Encryption can be regarded as a particular type of side-channel leakage tolerant architecture. However, Tiri et al. do not provide specific constructions of the permutations $P_1$ and $P_2$. Furthermore, they do not discuss how to distribute the secret permutation keys $K_{p1}$ and $K_{p2}$, nor how often these keys should be updated. In this work, we instantiate $P_1$ and $P_2$ using AONTs and partial AONTs. The random input $r_j$ and $r_{j-1}$ correspond to the keys $K_{p1}$ and $K_{p2}$. Since a fresh value of $r_j$ is used for each message packet, this corresponds to updating the keys $K_{p1}$ and $K_{p2}$ for each packet. In our Extended AONE algorithm, the 'session keys' correspond to the values of $r_j$, which update for each new message packet that is encrypted. In our solution, the value of the first session key $r_0$ must be securely communicated. Subsequent session keys (for subsequent packets) do not need to be explicitly relayed to the receiver. Because the pre- and post-encryption transforms are based on All-or-Nothing Transforms, the receiver uncovers the value of $r_j$ while decoding packet $m_j$. Therefore, updates of the 'session keys' happen as a by-product of the usage of AONTs.

## Combining with Efficient Encryption

It is worth noting that the performance of the Extended All-or-Nothing Encryption scheme can be enhanced by combining it with another application of AONTs, namely 'efficient encryption'.

In the 'efficient encryption' scheme, an AONT is applied to a plaintext message, but only some (as opposed to all) of the pseudo-message blocks are subsequently encrypted. The AONT mixes the plaintext in such a way that all of the pseudo-message blocks are required in order to invert the transform and regain the plaintext. Therefore, fewer secret-key encryptions and decryptions are required. The transmitted ciphertext comprises both encrypted and unencrypted pseudo-message blocks.

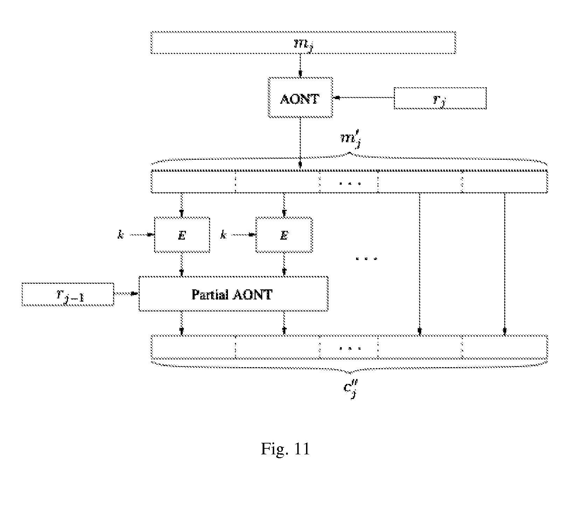

To combine the efficient encryption with the Extended AONE scheme, the plaintext message $m$ is transformed with an AONT, as before. A certain set of pseudo-message blocks is chosen to be encrypted; knowledge of which blocks are in the set can be made public. The presence of the AONT as a pre-encryption transform prevents DPA attacks on the encryption function based on known plaintext messages. A PET (in the form of a partial AONT) must be subsequently applied to those blocks that were encrypted, to prevent reverse DPA. The transmitted ciphertext consists of unencrypted pseudo-message blocks, along-side blocks that are output from the PET. An example of the combined scheme is shown in the block diagram in Figure 11. The system has the advantage of being resistant to DPA, whilst requiring fewer encryption operations to be performed with the secret key. Therefore, depending on the particular constructions used for the AONT and PET, and the message size, the overall latency and power consumption of the cryptosystem may be reduced.

## Constructions

Below, we suggest some constructions for the Extended All-or-Nothing Encryption scheme presented above. In each case, we suggest that the partial AONT used in the post-encryption transform should be based on the AONT that was used before the encryption function. In this way, most of the pseudo-random bits of the All-or-Nothing keystream required by the PET will have been generated previously.

The first construction is based on the OAEP All-or-Nothing transform (see Figure 2). The random inputs $r_j$ is passed to the mask generation function MGF1. The output of MGF1 is subsequently used to mask the message $m_j$. There are several advantages to using OAEP as the AONT. Firstly, it is based on a hash function, such as SHA-256. An implementation of this hash function could be re-used, for example in a key update procedure, allowing code/hardware re-use. Secondly, hardware implementations of hash functions can achieve high throughputs, meaning that the AONT can be computed efficiently. Finally, OAEP is well studied in its other role as a standardised padding scheme for RSA and, therefore, our AONT has the potential for re-use in this public-key setting.

However, it should be noted that the mask generation function MGF1 may be vulnerable to a DPA attack. In the standard, MGF1 accepts two inputs, a seed $r_j$ and the desired length of the output. A 32-bit counter ctr is initialised to zero, and the function output is generated by applying the hash function H to the concatenation of r and ctr, according to: $mask_{ctr} = H(r\|ctr)$

More output bits are generated, if required, by incrementing ctr and recomputing the hash. In each call to the hash function H, the random value $r_j$ (which changes for each message packet $m_j$) is actually fixed and unknown to an attacker. The counter value ctr is variable and known. If the message packet size is large, several calls to the hash function may be required in order to generate enough masking bits. Therefore, a DPA attacker monitoring the side-channel leakage during the calculation of the MGF1 function could potentially recover the value of $r_j$, and remove the protection provided by the AONT.

A safer solution would be to omit the counter from mask generation function, and use repeated hashing to generate the AON keystream:

$$mask_0 = H(r)$$
$$mask_{ctr} = H(mask_{ctr-1})$$

A second construction might be based on the CTRT transform (see Figure 3). Here, the random inputs $r_j$ becomes the key of a block cipher $E$, which is used to encrypt a public counter, generating the required All-or-Nothing keystream. This keystream is subsequently used to mask the message packet $m_j$. This AONT would be beneficial in devices with constrained area resources, because the same block cipher used for encryption could also be used by the AONT and PET. On the other hand, this scheme may not be suitable if the block cipher has a long key setup time, as the key $r_j$ changes for each new packet $m_j$. There is a trade-off between the length of the message packet $m_j$, the key setup time, and the frequency with which $r_j$ is updated.

However, since $r_j$ is fixed for the duration that packet $j$ is being processed and the counter is public, a DPA attack could theoretically be mounted on E to recover $r_j$. One workaround would be to limit the size of the packet $m_j$ so that only a small number of blocks (less than the number required to mount a DPA attack) would be encrypted musing $r_j$.

A better solution would be to modify the AONT construction, whilst adhering to the general model in Figure 4. Rather than use the block cipher $E$ in counter (CTR) mode to generate the AON keystream, we suggest using some other encryption mode, where each block encrypted by $E$ depends on the previous block, such as CBC, CFB or OFB. Since the key $r_j$ is unknown, the input and output blocks of $E$ are also unknown to a DPA attacker, precluding a DPA attack on the AONT. The last pseudo-message block would be generated by hushing $r_j$ together with the other pseudo-message blocks (e.g. using XOR, as in the case of CTRT), thereby completing the AONT. The corresponding AONTs could be termed CBCT, CFBT or OFBT respectively, depending on the encryption mode upon which each is based.

Since the block cipher-based constructions above are effectively using the block cipher as a synchronous stream cipher, an AONT could also be constructed using a dedicated stream cipher. In the aforementioned general model, the stream cipher would take the place of the AONT's expansion function $G$. The stream cipher would use $r_j$ as the key and produce the All-or-Nothing keystream by encrypting some public initialisation vector. Care needs to be taken that the stream cipher is not susceptible to DPA. The AON keystream generated by the stream cipher can subsequently be used to mask the message packet $m_j$. As above, the AONT would be completed by hushing $r_j$ together with the masked message, e.g. using XOR, thereby generating the last pseudo-message block. It may be undesirable to include hardware for both a stream cipher and the actual encryption algorithm $E$ in the same implementation, because of area constraints. However, stream ciphers have recently been designed specifically to work well in restricted area environments. Many such stream ciphers have advantages over block ciphers such as AES. Therefore, it may well be possible to build fast, area efficient AONTs based on stream ciphers. Another solution would be to re-use the same stream cipher that was used to build the AONT, to realise the encryption algorithm $E$.

It is possible to derive an alternative set of transforms for use as a DPA countermeasure. These transforms are also based on the general AONT model, but the All-or-Nothing property is omitted. For example, an alternative pre-encryption transform (derived from OAEP) may consist of MGF1 applied to a shared random value $r_\alpha$, followed by an XOR with the message $m$. The step where $r_\alpha$ is hashed along with the pseudo-message is omitted. Therefore, no 'key updates' can take place, and the receiver must already possess the value of $r_\alpha$ in order to invert the transform.

The alternative post-encryption transform would possess similar characteristics, XOR-ing the output of the encryption function $c'$ with a pseudo-random sequence generated from $r_\beta$, to produce the transmitted ciphertext $c''$. The value of $r_\beta$ must be known only to the sender and receiver; it may be the case that $r_\beta$ is derived from $r_\alpha$. Here, the message is not considered in packets $m_j$, because $r_\alpha$ and $r_\beta$ provide the seeds for the pseudo-random keystreams that are used for all packets throughout the entire communication. This alternative set of transforms is somewhat similar to the general 'side-channel leakage tolerant architecture' of Tiri et al.

Because the All-or-Nothing property is omitted from these alternative transforms, their hardware implementations may compute in slightly less time and consume fewer area resources. However, we point out the following disadvantages of using these alternative transforms instead of the Extended All-or- Nothing scheme described above:

- The security of the fixed values $r_\alpha$ and $r_\beta$ is paramount to protecting against DPA. If these values can be determined by an attacker, then all messages packets are susceptible to DPA attacks. On the other hand, Extended All-or-Nothing encryption provides a method of securely updating the random $r_j$ values that are used in the transforms. Even if one of these random values could be determined by an attacker, it is only valid for two packets, and is of limited use.
- Combining these alternative transforms with the Efficient Encryption application, as described above, leads to security issues. Ciphertext blocks that were not encrypted by the encryption function $E$ using secret key $k$ would now be wholly dependent on the secrecy of $r_\alpha$ and $r_\beta$ to provide security. The strong security properties that derive from the use of $E$ would not be imparted to all of the blocks of the pseudo-message. On the other hand, in Extended All-or-Nothing Encryption, the receiver requires the entire pseudo-message before the plaintext can be recovered, due to the All-or-Nothing property. Even if only some of the pseudo-message blocks are encrypted using $E$, the security properties of the cipher $E$ are imparted to the entire pseudo-message, because of the All-or-Nothing relationship among the pseudo-message blocks.

**Further Constructions**

Boolean and arithmetic masking are among the most popular DPA countermeasures. If masking schemes are applied at the algorithm level, they must be designed specifically for the encryption algorithm being used. This extra design effort typically provides first-order DPA security, at the cost of efficiency. Masking at the gate level can be performed independently of the encryption algorithm, but such schemes also typically impact the area and speed of the cryptosystem.

The Extended All-or-Nothing Encryption protocol provides DPA resistance that is not specific to a particular encryption algorithm. Clearly, extra area and time are required in order to perform the pre- and post-encryption transforms. This is not necessarily a disadvantage if a fast AONT is employed. As an example, consider the OAEP transform, which is based on a hash function. It has been shown that dedicated hardware for hash functions can achieve high data throughputs compared to block cipher architectures. In addition, we have shown that due to the All-or-Nothing property, it is unnecessary to encrypt the entire AONT output since it is sufficient to encrypt just some of the pseudo- message blocks. Therefore, a trade-off can be reached between the time it takes to transform the blocks and the number of blocks encrypted, so that the overall latency of the system is unaffected.

It has also been shown that even masked implementations are susceptible to higher-order DPA attacks. These higher-order attacks circumvent the masking countermeasure by considering multiple samples within a power trace. These samples correspond to places in the algorithm where the same mask is used with different (but predictable) data. However, all of these higher- order attacks include a hypothesis phase based on known data. All-or-Nothing encryption removes the ability of an attacker to form hypotheses and, therefore, provides protection against higher-order attacks as well as first-order attacks.

Template attacks are a powerful form of side-channel attack. These attacks assume that an attacker is in possession of a device similar to the target device, which can be used to characterise the power consumption of various operations, based on different key values. During the attack on the target device, an attacker compares the power traces to the pre-computed templates. A maximum- likelihood approach is used to determine the best match, thereby revealing secret information about the target device. Template attacks have proven devastatingly effective at recovering secret information, even from masked implementations.

**EP 2 148 462 A1**

Template attacks could also be used to mount an attack on our Extended All-or-Nothing system. Consider an encryption round with 8-bit input $m'$, output $c'$, and round key $k_r$, of the form $c' = S(m' \oplus k_r)$, where S is a non-linear substitution permutation, such as the AES S-box. A template attacker may be able to recover knowledge of the Hamming weight of $c'$ and the Hamming weight of $m'$, and this could significantly reduce the keyspace for round key $k_r$ for an attacker. It is not necessary to know the exact value of $m'$ or $c'$; only the Hamming weights are required.

To avoid this type of attack, the Extended All-or-Nothing encryption system should be supplemented with some other countermeasure, such as insertion of dummy clock cycles; random re-ordering of instructions, etc. Generally, it is considered good practice to combine countermeasures in order to achieve side- channel attack resistance. Therefore, Extended All-or-Nothing encryption is not a panacea to all side-channel attacks. However, it is a general counter- measure for both first- and higher-order DPA attacks. We propose the use of this new protocol as an alternative to the masking countermeasure, because it is comparatively inexpensive in terms of design time, execution time and area resources. We can also note that template attacks, as defined in the literature, require a device that is used to characterise the behaviour of the cryptosystem. Given that the random values used will be generated within a device it will be difficult to achieve this. Moreover, one would not expect to be able to get a bank card, SIM etc. where one is able to change the keys.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The invention is not limited to the embodiments hereinbefore described but may be varied in both construction and detail.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

**Claims**

1. A method for inhibiting Differential Side-Channel Analysis attacks on hardware and embedded software implementations of cryptographic algorithms, the method comprising the steps of:

   applying an AONT to plaintext to be encoded to form a pseudo message,
   encrypting the pseudo message using an encryption function and key to create ciphertext.

2. The method of claim 1 further comprising: applying a post-encryption transform to the ciphertext.

3. The method of claim 1 further comprising: applying a partial AONT to a public initialisation vector, wherein the output of said partial AONT is used to seed the encryption function.

4. The method of claim 1 further comprising: using a predetermined secret random number to seed the encryption function.

5. The method of any preceding claim, further comprising:

   decrypting the ciphertext with a decryption function and key to produce a pseudo message, and
   applying an inverse AONT to the pseudo message to retrieve the plaintext.

6. A method of encrypting a message to be transmitted, the method comprising the steps of:

   a. dividing the message to be transmitted into a plurality of packets,
   b. transforming the first of said packets using an AONT with a secret random value to produce a pseudo message

18

packet,

c. encrypting the pseudo-message packet with an encryption algorithm and a secret key to produce an encrypted pseudo-message packet,

d. applying a partial AONT to the encrypted pseudo-message packet using a predetermined secret random value to produce a ciphertext packet for transmission, and

e. repeating steps b. to d. for all remaining packets of the message to be transmitted, wherein for each remaining packet the predetermined secret random value used in step d. is the secret random value used in step b. for the previous packet.

7. The method of claim 6 wherein said pseudo message packet comprises a plurality of pseudo-message blocks, and wherein:

said step of encrypting comprises encrypting a subset of said pseudo-message blocks with an encryption algorithm and a secret key to produce at least one encrypted pseudo-message block;

said step of applying a partial AONT comprises applying a partial AONT to each encrypted pseudo-message block using a secret predetermined random number, and forming a ciphertext packet comprising at least one pseudo message block and at least one encrypted pseudo message block to which the partial AONT has been applied;

the method further comprising the step of assembling the ciphertext packets into a ciphertext message.

8. A method of encrypting a message to be transmitted, the method comprising the steps of:

a. dividing the message to be transmitted into a plurality of packets,

b. transforming the first of said packets using an AONT with a secret random value to produce a pseudo message packet,

c. applying a partial AONT to a public initialisation value using a predetermined secret random value,

d. indirectly encrypting the pseudo-message packet with an encryption algorithm and a secret key to produce an encrypted pseudo-message packet, wherein the output of said partial AONT is used to seed the encryption algorithm;

e. repeating steps b. to d. for all remaining packets of the message to be transmitted, wherein for each remaining packet the predetermined secret random value used in step d. is the secret random value used in step b. for the previous packet.

9. A method of encrypting a message to be transmitted, the method comprising the steps of:

a. dividing the message to be transmitted into a plurality of packets,

b. transforming the first of said packets using an AONT with a secret random value to produce a pseudo message packet,

c. indirectly encrypting the pseudo-message packet with an encryption algorithm and a secret key to produce an encrypted pseudo-message packet, wherein a predetermined secret random value is used to seed the encryption algorithm;

d. repeating steps b. and c. for all remaining packets of the message to be transmitted, wherein for each remaining packet the predetermined secret random value used in step c. is the secret random value used in step b. for the previous packet.

10. The method of claim 8 or claim 9 wherein said pseudo message packet comprises a plurality of pseudo-message blocks, and wherein:

said step of indirectly encrypting comprises encrypting a subset of said pseudo-message blocks with an encryption algorithm and a secret key to produce at least one encrypted pseudo-message block; and forming a ciphertext packet comprising at least one pseudo message block and at least one encrypted pseudo-message block;

the method further comprising the step of assembling the ciphertext packets into a ciphertext message.

11. A method of decrypting a received message comprising a plurality of packets, the method comprising the steps of:

a. processing the first received packet of the message using an inverse partial AONT using a predetermined secret random value to produce an encrypted pseudo-message packet,

b. decrypting the encrypted pseudo-message packet with a decryption algorithm and a secret key to produce a pseudo message packet,

c. applying an inverse AONT to the pseudo message packet to generate a message packet and a secret random value,

d. repeating steps a. to c. for all remaining packets of the received message, wherein for each remaining packet the predetermined secret random value is the secret random value that was generated in step c. for the previous packet,

e. reassembling the decrypted message packets to form a decrypted message.

12. The method of claim 11 wherein the received message is a ciphertext comprising a plurality of packets, each comprising at least one encrypted pseudo message block and at least one unencrypted pseudo message block, and wherein:

the step of processing comprises processing each encrypted pseudo message block of a first packet using an inverse partial AONT using a predetermined secret random value to produce at least one encrypted pseudo-message block, and wherein:

the step of decrypting comprises decrypting each encrypted pseudo-message block with a decryption algorithm and a secret key to produce at least one pseudo message block, and combining the at least one pseudo message block with the at least one unencrypted pseudo message block into a pseudo message packet.

13. A method of decrypting a received message, the method comprising the steps of:

a. applying a partial AONT to a public initialisation value using a predetermined secret random value,

b. decrypting the first received packet with a decryption algorithm and a secret key to produce a pseudo message packet, wherein the output of the partial AONT is used to seed the decryption algorithm;

c. applying an inverse AONT to the pseudo message packet to generate a message packet and a secret random value,

d. repeating steps a. to c. for all remaining packets of the received message, wherein for each remaining packet the predetermined secret random value is the secret random value that was generated in step c. for the previous packet,

e. reassembling the decrypted message packets to form a decrypted message.

14. A method of decrypting a received message, the method comprising the steps of:

a. decrypting the first received packet with a decryption algorithm and a secret key to produce a pseudo message packet, wherein a predetermined secret random value is used to seed the decryption algorithm;

b. applying an inverse AONT to the pseudo message packet to generate a message packet and a secret random value,

c. repeating steps a. and b. for all remaining packets of the received message, wherein for each remaining packet the predetermined secret random value is the secret random value that was generated in step c. for the previous packet,

d. reassembling the decrypted message packets to form a decrypted message.

15. The method of claim 12 or claim 13 wherein the received message is a ciphertext comprising a plurality of packets, each comprising at least one encrypted pseudo message block and at least one unencrypted pseudo message block, and wherein the step of decrypting comprises decrypting each encrypted pseudo-message block with a decryption algorithm and a secret key to produce at least one pseudo message block, and combining the at least one pseudo message block with the at least one unencrypted pseudo message block into a pseudo message packet.

16. A computer program comprising program instructions for causing a computer to perform the method of any preceding claim.

17. A system for inhibiting Differential Side-Channel Analysis attacks on hardware and embedded software implementations of cryptographic algorithms, the system comprising:

means for applying an AONT to plaintext to be encoded to form a pseudo message, and

means for encrypting the pseudo message using an encryption function and key to create ciphertext.

$$m \longrightarrow \boxed{\text{AONT}} \xrightarrow{m'} \boxed{E} \longrightarrow c'$$

$$r \qquad\qquad k$$

| All-or-Nothing Encryption | All-or-Nothing Decryption |
|---|---|
| Inputs: plaintext $m$, randomness $r$ | Inputs: ciphertext $c'$ |
| 1. $m' = \text{AONT}_r(m)$; | 1. $m' = D_k(c')$; |
| 2. $c' = E_k(m')$; | 2. $(m, r) = \text{Inv-AONT}(m')$; |

Fig. 1

| OAEP | Inverse-OAEP |
|---|---|
| Inputs: message $m$, randomness $r$ | Input: pseudo-message $s\|t$ |
| Output: pseudo-message $s\|t$ | Outputs: randomness $r$, message $m$ |
| 1. $s = m \oplus G(r)$; | 1. $r = t \oplus H(s)$; |
| 2. $t = r \oplus H(s)$; | 2. $m = s \oplus G(r)$; |

Fig. 2

| **CTRT** | |
|---|---|
| Inputs: | message blocks $m_i$, $1 \leq i \leq n$ |
| | random key $k'$ |
| Outputs: | pseudo-message blocks $m'_i$, $1 \leq i \leq n+1$ |
| 1. | $m'_i = m_i \oplus E_{k'}(i);\ 1 \leq i \leq n$ |
| 2. | $m'_{n+1} = k' \oplus m'_1 \oplus m'_2 \oplus \cdots \oplus m'_n;$ |
| **Inv-CTRT** | |
| Inputs: | pseudo-message blocks $m'_i$, $1 \leq i \leq n+1$ |
| Outputs: | random key $k'$ |
| | message blocks $m_i$, $1 \leq i \leq n$ |
| 1. | $k' = m'_1 \oplus m'_2 \oplus \cdots \oplus m'_{n+1};$ |
| 2. | $m_i = m'_i \oplus E_{k'}(i);\ 1 \leq i \leq n$ |

Fig. 3

Fig. 4

Known
Variable
$m$ —————→ **AONT** — Unknown
Variable
$m'$ —→ $E$ —→ Known
Variable
$c'$

Unknown
Variable
$r$

Unknown
Constant
$k$

Fig. 5

Known
Variable
$m$ ———→ **AONT** — Unknown
Variable
$m'$ —→ $E$ — Unknown
Variable
$c'$ —→ **PET** —→ Known
Variable
$c''$

Unknown
Variable
$r$

Unknown
Constant
$k$

$k_s$

Fig. 6

$m_j \longrightarrow$ **AONT** $\xrightarrow{m'_j}$ $E$ $\xrightarrow{c'_j}$ **Partial AONT** $\xrightarrow{c''_j}$

$r_j$ $\qquad$ $k$ $\qquad$ $r_{j-1}$

Fig. 7

$m_j \longrightarrow$ **AONT** $\xrightarrow{m'_j}$ $\oplus \longrightarrow c''_j$

$r_j$

$c'_j$

$IV \longrightarrow$ $E$

$k$

Fig. 8

Fig. 9

Fig. 10

Fig. 11

Europäisches
Patentamt

European
Patent Office

Office européen
des brevets

## EUROPEAN SEARCH REPORT

Application Number

EP 08 16 0920

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RIVEST R L: "All-or-nothing encryption and the package transform" FAST SOFTWARE ENCRYPTION. 4TH INTERNATIONAL WORKSHOP, FSE'97 PROCEEDING, SPRINGER-VERLAG, BERLIN, GERMANY, 20 January 1997 (1997-01-20), pages 210-218, XP007907068 ISBN: 978-3-540-63247-4 * pages 210-212 * | 1,16,17 | INV. H04L9/06 |
| X | MCEVOY R P ET AL: "Efficient all-or-nothing encryption using CTR mode" SECRYPT 2006. INTERNATIONAL CONFERENCE ON SECURITY AND CRYPTOGRAPHY, SECRYPT 2006. INTERNATIONAL CONFERENCE ON SECURITY AND CRYPTOGRAPHY, PORTUGAL, 1 January 2006 (2006-01-01), pages 302-310, XP007907101 ISBN: 978-972-8865-63-4 * pages 95-96 * | 1,16,17 | |
| X | GOUBIN L ET AL: "DES AND DIFFERENTIAL POWER ANALYSIS THE DUPLICATION METHOD" CRYPTOGRAPHIC HARDWARE AND EMBEDDED SYSTEMS. 1ST INTERNATIONAL WORKSHOP, CHES'99. WORCESTER, MA, AUG. 12 - 13, 1999 PROCEEDINGS; [LECTURE NOTES IN COMPUTER SCIENCE], BERLIN : SPRINGER, DE, vol. 1717, 1 August 1999 (1999-08-01), pages 158-172, XP000952192 ISBN: 978-3-540-66646-2 * pages 163-166 * * page 171 * | 1,16,17 | TECHNICAL FIELDS SEARCHED (IPC) H04L G06F |

-/--

The present search report has been drawn up for all claims

| Place of search | Date of completion of the search | Examiner |
|---|---|---|
| Munich | 9 February 2009 | Horbach, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 16 0920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | STANDAERT O-X ET AL: "An overview of power analysis attacks against field programmable gate arrays" PROCEEDINGS OF THE IEEE, IEEE. NEW YORK, US, vol. 94, no. 2, 1 February 2006 (2006-02-01), pages 383-394, XP007907102 ISSN: 0018-9219 * page 390 - page 392 * ----- | 1-17 | |

TECHNICAL FIELDS
SEARCHED      (IPC)

The present search report has been drawn up for all claims

| Place of search | Date of completion of the search | Examiner |
|---|---|---|
| Munich | 9 February 2009 | Horbach, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................................

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Christophe Giraud ; Emmanuel Prouff.** A new approach to counteract DPA attacks on block ciphers. *Private Communication,* September 2007, http://eprint.iacr.org/2005/340
- **Kris Tiri ; Patrick Schaumont ; Ingrid Verbauwhede.** Side-channel leakage tolerant architectures. *Third International Conference on Information Technology: New Generations,* 2006, 204-209
- **François-Xavier Standaert ; Eric Peters ; Gaël Rouvroy ; Jean-Jacques Quisquater.** An overview of power analysis attacks against field programmable gate arrays. *Proceedings of the IEEE,* February 2006, vol. 94 (2), 383-394
- **Suresh Chari ; Charanjit S. Jutla ; Josyula R. Rao ; Pankaj Rohatgi.** Towards Sound Approaches to Counteract Power-Analysis Attacks. *Advances in Cryptology - CRYPTO '99, 19th Annual International Cryptology Conference,* 1999, 398-412